# EUROPEAN PATENT APPLICATION

(11) **EP 4 827 162 A1**
(43) Date of publication of application: **21.10.2026**
(21) Application number: 24916535.8
(22) Date of filing: 30.10.2024
(51) Int. Cl.: H04W 28/02

(54) **METHOD FOR REDUCING INTER-AP COMMUNICATION INTERFERENCE, COMMUNICATION SYSTEM, AND APPARATUS**

(30) Priority: 11.01.2024 CN 202410045302
(71) Applicant: Huawei Technologies Co., Ltd., Shenzhen, Guangdong 518129 (CN)
(72) Inventor: SHI, Cao, Shenzhen, Guangdong 518129 (CN); XUE, Jianlin, Shenzhen, Guangdong 518129 (CN); LV, Jinxiong, Shenzhen, Guangdong 518129 (CN); SONG, Xianhui, Shenzhen, Guangdong 518129 (CN)
(74) Representative: Thun, Clemens
(86) International application number: PCT/CN2024/128565
(87) International publication number: WO 2025/148484

(57) **Abstract**

A method for reducing communication interference between APs, and a communication system and apparatus are disclosed. The method includes: A controller obtains information about a first AP and a second AP that are managed by the controller, where Wi-Fi modules of the first AP and the second AP achieve time synchronization with the controller via a PON, and the first AP and the second AP interfere with each other when simultaneously performing data transmission. The controller allocates time units to the first AP and the second AP for data transmission, where the time units in which the first AP and the second AP perform data transmission are different. Based on this solution, for the first AP and the second AP that interfere with each other when simultaneously transmitting data, the controller allocates different time units to the first AP and the second AP. In addition, the Wi-Fi modules of the first AP and the second AP may achieve time synchronization with the controller via the PON. The first AP and the second AP may perform data transmission in different time units based on a same time reference as the controller.

## Description

This application claims priority to Chinese Patent Application No. 202410045302.4, filed with the China National Intellectual Property Administration on January 11, 2024 and entitled "METHOD FOR REDUCING COMMUNICATION INTERFERENCE BETWEEN APS, AND COMMUNICATION SYSTEM AND APPARATUS", which is incorporated herein by reference in its entirety.

### TECHNICAL FIELD

This application relates to the field of communication technologies, and in particular, to a method for reducing communication interference between access points (access points, APs), and a communication system and apparatus.

### BACKGROUND

Wi-Fi is a wireless local area network technology, and a user station (station, STA) may access a Wi-Fi network through an AP in the network. Currently, a Wi-Fi network typically includes a plurality of APs operating on a same radio frequency band. If the plurality of APs transmit data in parallel, the plurality of APs interfere with each other in regions where coverage areas of the plurality of APs overlap, degrading communication performance of the Wi-Fi network.

### SUMMARY

This application provides a method for reducing communication interference between APs, and a communication system and apparatus, to resolve a problem that communication interference between a plurality of APs managed by a controller is caused when the APs send data in parallel.

According to a first aspect, a method for reducing communication interference between APs is provided. The method may be performed by a controller, or may be performed by a component of the controller, for example, a processor, a chip, or a chip system of the controller, or may be implemented by a logic module or software that can implement all or a part of functions of the controller. The method may include: First, the controller may obtain information about a first AP and information about a second AP, where the first AP and the second AP are managed by the controller, Wi-Fi modules of the first AP and the second AP achieve time synchronization with the controller via a passive optical network PON, and the first AP and the second AP interfere with each other when simultaneously performing data transmission. Then, the controller may allocate, based on the information about the first AP, the information about the second AP, and a time unit allocation policy, time units to the first AP and the second AP for data transmission. A time unit allocated by the controller to the first AP for data transmission is different from a time unit allocated by the controller to the second AP for data transmission. Then, the controller may send first time unit indication information to the first AP, and send second time unit indication information to the second AP. The first time unit indication information indicates the time unit allocated by the controller to the first AP for data transmission, and the second time unit indication information indicates the time unit allocated by the controller to the second AP for data transmission.

Based on this solution, for the first AP and the second AP that interfere with each other when simultaneously transmitting data, the controller may allocate different time units to the first AP and the second AP for data transmission. In addition, the Wi-Fi modules of the first AP and the second AP may achieve time synchronization with the controller via the PON. Therefore, the first AP and the second AP may perform data transmission in different time units based on a same time reference as the controller. This method can effectively resolve a problem of mutual interference caused by simultaneous data transmission between APs, thereby reducing or even avoiding communication interference between APs in a communication system.

With reference to the first aspect, in a possible implementation, the time unit may be a slot.

With reference to the first aspect, in a possible implementation, time of the Wi-Fi modules of the first AP and the second AP is synchronized with that of the controller at a nanosecond level.

With reference to the first aspect, in a possible implementation, the first AP and the second AP are optical APs, and the first AP and the second AP each include an ONU module and a Wi-Fi module. The Wi-Fi modules of the first AP and the second AP achieving time synchronization with the controller via the PON may specifically include: ONU modules of the first AP and the second AP achieve time synchronization with the controller via the PON, and the Wi-Fi modules of the first AP and the second AP achieve time synchronization with the ONU modules through internal interfaces.

With reference to the first aspect, in a possible implementation, the time unit allocation policy is a simple policy, and the simple policy indicates the controller to allocate different time units to different APs.

With reference to the first aspect, in a possible implementation, the time unit allocation policy is an intelligent policy, and the intelligent policy indicates the controller to allocate different time units to APs that interfere with each other when simultaneously performing data transmission.

Based on the foregoing two policies, the controller may allocate different time units to the first AP and the second AP for data transmission, to avoid mutual interference caused by simultaneous data transmission of the first AP and the second AP.

With reference to the first aspect, in a possible implementation, the first time unit indication information and the second time unit indication information are carried over a dedicated network, and the dedicated network is a dedicated network established between the controller and an AP connected to the controller.

With reference to the first aspect, in a possible implementation, the information about the first AP and/or the information about the second AP is preconfigured.

With reference to the first aspect, in a possible implementation, the method may further include: The controller receives a first registration packet from the first AP, where the first registration packet carries the information about the first AP, and indicates that the first AP is managed by the controller; and/or the controller receives a second registration packet from the second AP, where the second registration packet carries the information about the second AP, and indicates that the second AP is managed by the controller.

With reference to the first aspect, in a possible implementation, the first registration packet and the second registration packet are carried over the dedicated network, and the dedicated network is the dedicated network established between the controller and the AP connected to the controller.

With reference to the first aspect, in a possible implementation, before the controller receives the first registration packet and the second registration packet, the method may further include: The controller sends a registration broadcast packet, where the registration broadcast packet indicates the AP connected to the controller to register with the controller.

With reference to the first aspect, in a possible implementation, the registration broadcast packet is carried over the dedicated network, and the dedicated network is the dedicated network established between the controller and the AP connected to the controller.

According to a second aspect, a method for reducing communication interference between APs is provided. The method may be performed by a first AP, or may be performed by a component of the first AP, for example, a processor, a chip, or a chip system of the first AP, or may be implemented by a logic module or software that can implement all or a part of functions of the first AP. The method may include: First, the first AP receives first time unit indication information from a controller, where the first time unit indication information indicates a time unit allocated by the controller to the first AP for data transmission, the first AP is managed by the controller, and a Wi-Fi module of the first AP achieves time synchronization with the controller via a passive optical network PON. Then, the Wi-Fi module of the first AP performs, based on time synchronized with that of the controller, data transmission in the time unit allocated by the controller to the first AP for data transmission.

Based on this solution, the first AP managed by the controller may perform, based on a same time reference as the controller, data transmission in the time unit allocated by the controller. Compared with a solution in the conventional technology that a controller controls, by using a switch information control packet, an AP to start receiving/sending or stop receiving/sending, the solution in this application can reduce an error caused by a transmission delay of a switch information control packet.

With reference to the second aspect, in a possible implementation, the time unit is a slot.

With reference to the second aspect, in a possible implementation, time of the Wi-Fi module of the first AP is synchronized with that of the controller at a nanosecond level.

With reference to the second aspect, in a possible implementation, the first AP is an optical AP, and the first AP includes an optical network unit ONU module and the Wi-Fi module. The Wi-Fi module of the first AP achieving time synchronization with the controller via the PON may specifically include: The ONU module of the first AP achieves time synchronization with the controller via the PON, and the Wi-Fi module of the first AP achieves time synchronization with the ONU module through an internal interface.

With reference to the second aspect, in a possible implementation, the method may further include: The first AP sends a first registration packet to the controller. The first registration packet includes information about the first AP, and indicates that the first AP is managed by the controller.

With reference to the second aspect, in a possible implementation, before the first AP sends the first registration packet to the controller, the method may further include: The first AP receives a registration broadcast packet from the controller, where the registration broadcast packet indicates an AP connected to the controller to register with the controller.

With reference to the second aspect, in a possible implementation, the registration broadcast packet and the first registration packet may be carried over a dedicated network, and the dedicated network is a dedicated network established between the controller and the AP connected to the controller.

According to a third aspect, a method for reducing communication interference between APs is provided. The method may be performed by a second AP, or may be performed by a component of the second AP, for example, a processor, a chip, or a chip system of the second AP, or may be implemented by a logic module or software that can implement all or a part of functions of the second AP. The method may include: First, the second AP receives second time unit indication information from a controller, where the second time unit indication information indicates a time unit allocated by the controller to the second AP for data transmission, the second AP is managed by the controller, and a Wi-Fi module of the second AP achieves time synchronization with the controller via a passive optical network PON. Then, the Wi-Fi module of the second AP performs, based on time synchronized with that of the controller, data transmission in the time unit allocated by the controller to the second AP for data transmission.

With reference to the third aspect, in a possible implementation, the time unit is a slot.

With reference to the third aspect, in a possible implementation, time of the Wi-Fi module of the second AP is synchronized with that of the controller at a nanosecond level.

With reference to the third aspect, in a possible implementation, the second AP is an optical AP, and the second AP includes an optical network unit ONU module and the Wi-Fi module. The Wi-Fi module of the second AP achieving time synchronization with the controller via the PON may specifically include: The ONU module of the second AP achieves time synchronization with the controller via the PON, and the Wi-Fi module of the second AP achieves time synchronization with the ONU module through an internal interface.

With reference to the third aspect, in a possible implementation, the method may further include: The second AP sends a second registration packet to the controller. The second registration packet includes information about the second AP, and indicates that the second AP is managed by the controller.

With reference to the third aspect, in a possible implementation, before the second AP sends the second registration packet to the controller, the method may further include: The second AP receives a registration broadcast packet from the controller, where the registration broadcast packet indicates an AP connected to the controller to register with the controller.

With reference to the third aspect, in a possible implementation, the registration broadcast packet and the second registration packet may be carried over a dedicated network, and the dedicated network is a dedicated network established between the controller and the AP connected to the controller.

Technical effects achieved by implementations of the third aspect are the same as those of the second aspect. Details are not described herein again.

According to a fourth aspect, this application provides a communication apparatus. The communication apparatus may be the controller in the first aspect, or the chip or the chip system in the controller in the first aspect, or may be a functional module in the controller in the first aspect. The communication apparatus may implement functions performed by the controller in any one of the possible designs of the first aspect, and the functions may be implemented by hardware executing corresponding software. The hardware or the software includes one or more modules corresponding to the functions. For example, the communication apparatus may include a transceiver module and a processing module. The transceiver module may be configured to obtain information about a first AP and information about a second AP, where the first AP and the second AP are managed by the controller, Wi-Fi modules of the first AP and the second AP achieve time synchronization with the controller via a passive optical network PON, and the first AP and the second AP interfere with each other when simultaneously performing data transmission. The processing module may be configured to allocate, based on the information about the first AP, the information about the second AP, and a time unit allocation policy, time units to the first AP and the second AP for data transmission. A time unit allocated by the controller to the first AP for data transmission is different from a time unit allocated by the controller to the second AP for data transmission. The transceiver module may be further configured to: send first time unit indication information to the first AP, and send second time unit indication information to the second AP. The first time unit indication information indicates the time unit allocated by the controller to the first AP for data transmission, and the second time unit indication information indicates the time unit allocated by the controller to the second AP for data transmission.

With reference to the fourth aspect, in a possible implementation, the transceiver module may be further configured to: receive a first registration packet from the first AP, and/or receive a second registration packet from the second AP. The first registration packet carries the information about the first AP, and indicates that the first AP is managed by the controller. The second registration packet carries the information about the second AP, and indicates that the second AP is managed by the controller.

With reference to the fourth aspect, in a possible implementation, the transceiver module may be further configured to send a registration broadcast packet, where the registration broadcast packet indicates an AP connected to the controller to register with the controller.

According to a fifth aspect, this application provides a communication apparatus. The communication apparatus may be the first AP in the second aspect, or the chip or the chip system in the first AP in the second aspect, or may be a functional module in the first AP in the second aspect. The communication apparatus may implement functions performed by the first AP in any one of the possible designs of the second aspect, and the functions may be implemented by hardware executing corresponding software. The hardware or the software includes one or more modules corresponding to the functions. For example, the communication apparatus may include a transceiver module, and the transceiver module may specifically include a wired module and a Wi-Fi module. The wired module may be configured to receive first time unit indication information from the controller, where the first time unit indication information indicates a time unit allocated by the controller to the first AP for data transmission. The Wi-Fi module may be configured to perform, based on time synchronized with that of the controller, data transmission in the time unit allocated by the controller to the first AP for data transmission.

With reference to the fifth aspect, in a possible implementation, the wired module may be further configured to send a first registration packet to the controller, where the first registration packet includes information about the first AP, and indicates that the first AP is managed by the controller.

With reference to the fifth aspect, in a possible implementation, the wired module may be further configured to receive a registration broadcast packet from the controller, where the registration broadcast packet indicates an AP connected to the controller to register with the controller.

According to a sixth aspect, this application provides a communication apparatus. The communication apparatus may be the second AP in the third aspect, or the chip or the chip system in the second AP in the third aspect, or may be a functional module in the second AP in the third aspect. The communication apparatus may implement functions performed by the second AP in any one of the possible designs of the third aspect, and the functions may be implemented by hardware executing corresponding software. The hardware or the software includes one or more modules corresponding to the functions. For example, the communication apparatus may include a transceiver module, and the transceiver module may specifically include a wired module and a Wi-Fi module. The wired module may be configured to receive second time unit indication information from the controller, where the second time unit indication information indicates a time unit allocated by the controller to the second AP for data transmission. The Wi-Fi module may be configured to perform, based on time synchronized with that of the controller, data transmission in the time unit allocated by the controller to the second AP for data transmission.

With reference to the sixth aspect, in a possible implementation, the wired module may be further configured to send a second registration packet to the controller, where the second registration packet includes information about the second AP, and indicates that the second AP is managed by the controller.

With reference to the sixth aspect, in a possible implementation, the wired module may be further configured to receive a registration broadcast packet from the controller, where the registration broadcast packet indicates an AP connected to the controller to register with the controller.

According to a seventh aspect, a communication system is provided. The communication system may include the controller, the first AP, and the second AP in the first aspect to the third aspect.

According to an eighth aspect, a communication apparatus is provided, including a processor and a memory. The memory is configured to store computer instructions. When the communication apparatus runs, the processor executes the computer instructions stored in the memory, so that the apparatus performs the method for reducing communication interference between APs according to any one of the first aspect, the second aspect, or the third aspect.

With reference to the eighth aspect, in a possible implementation, the apparatus further includes a communication interface. The communication interface is used by the communication apparatus to communicate with another device. For example, the communication interface may be a transceiver, an input/output interface, an interface circuit, an output circuit, an input circuit, a pin, a related circuit, or the like.

According to a ninth aspect, a computer-readable storage medium is provided. The computer-readable storage medium stores instructions, and when the instructions are run on a computer, the computer is caused to perform the method for reducing communication interference between APs according to any one of the first aspect, the second aspect, or the third aspect.

According to a tenth aspect, a computer program product including instructions is provided. When the computer program product runs on a computer, the computer is caused to perform the method for reducing communication interference between APs according to any one of the first aspect, the second aspect, or the third aspect.

For technical effects of any design in the fourth aspect to the tenth aspect, refer to technical effects of different designs in the first aspect, the second aspect, or the third aspect. Details are not described herein again.

### BRIEF DESCRIPTION OF DRAWINGS

FIG. 1 is a diagram of a structure of a Wi-Fi network according to an embodiment of this application;
FIG. 2 is a diagram of a structure of another Wi-Fi network according to an embodiment of this application;
FIG. 3 is a diagram of a structure of a communication system according to an embodiment of this application;
FIG. 4 is a diagram of a structure of another communication system according to an embodiment of this application;
FIG. 5 is a diagram of a principle of performing time synchronization by a Wi-Fi module of an AP based on a time synchronization interface according to an embodiment of this application;
FIG. 6 is a schematic flowchart of a method for reducing communication interference between APs according to an embodiment of this application;
FIG. 7 is a diagram of a structure of a communication apparatus according to an embodiment of this application;
FIG. 8 is a diagram of a structure of another communication apparatus according to an embodiment of this application; and
FIG. 9 is a diagram of a structure of still another communication apparatus according to an embodiment of this application.

### DESCRIPTION OF EMBODIMENTS

For ease of understanding, related technical content in this application is first described.

Wi-Fi is a widely used manner of accessing a network on a user side. Currently, a same Wi-Fi network may provide a plurality of APs for user access. The plurality of APs in the same Wi-Fi network communicate on a same radio frequency band, and signal coverage areas of the plurality of APs in the same Wi-Fi network overlap. In most cases, two APs in a same Wi-Fi network interfere with each other when simultaneously performing data transmission. Consequently, data transmission is interrupted or a packet loss rate is high, degrading performance of the Wi-Fi network.

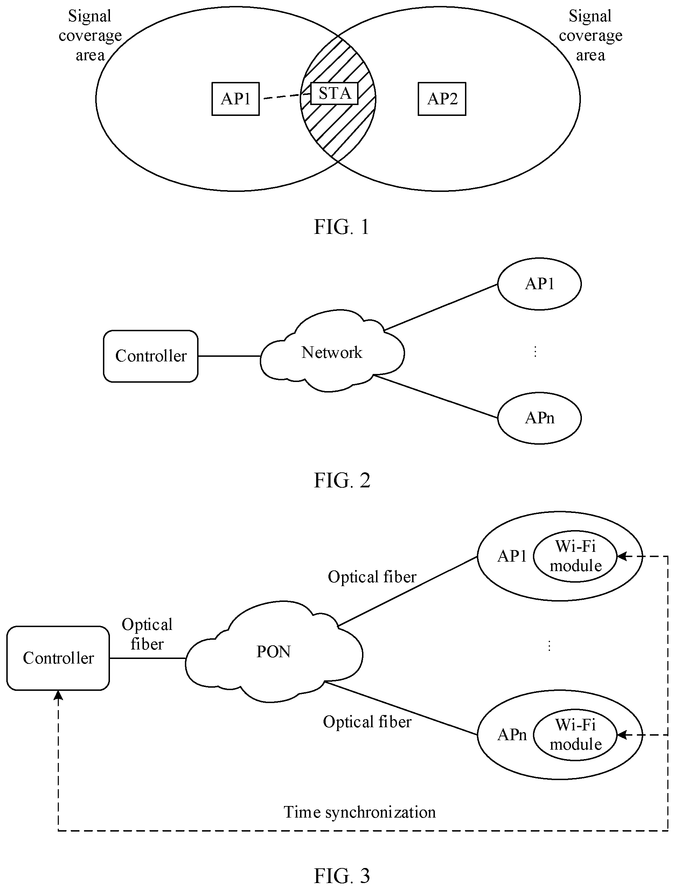

For example, FIG. 1 is a diagram of a Wi-Fi network. The Wi-Fi network may include two APs: an AP1 and an AP2. A signal coverage area of the AP1 overlaps a signal coverage area of the AP2, and a STA in a shadow region is connected to the AP1. When the STA in the shadow region performs data transmission with the AP1, if the AP2 also performs data transmission with another STA connected to the AP2, a signal of the AP2 interferes with data transmission between the STA in the shadow region and the AP1.

To reduce the foregoing phenomenon, in an implementation, a controller may manage a plurality of APs in a unified manner. For example, FIG. 2 is a diagram of a Wi-Fi network in which a controller and a plurality of APs are networked. The controller may be connected to the plurality of APs (for example, an AP1 to an APn in FIG. 2) via a network, and may control the plurality of APs. In this networking architecture, the controller may send a switch information control packet to each AP, and the AP may start or stop receiving/sending behavior based on the switch information control packet from the controller.

However, in this method, it needs to be strictly ensured that transmission delays of switch information control packets are consistent, so that a time difference between receiving switch information control packets by the APs is consistent with a time difference that is between starting or stopping receiving/sending behavior by the APs and that is determined by the controller. Otherwise, if the transmission delays of the switch information control packets are inconsistent, a time difference between receiving switch information control packets by at least some APs may be different from a time difference that is between starting or stopping receiving/sending behavior by the at least some APs and that is determined by the controller. Therefore, time periods in which the at least some APs perform data transmission may overlap, causing signal interference between the APs. This method has high requirements on a network delay and is difficult to promote and deploy.

In view of this, this application provides a method for reducing communication interference between APs. For a first AP and a second AP that interfere with each other when simultaneously transmitting data, the controller may allocate different time units to the two APs for data transmission. In addition, Wi-Fi modules of the first AP and the second AP may further achieve high-precision time synchronization with the controller via a passive optical network (passive optical network, PON). Therefore, the first AP and the second AP may perform data transmission in different time units based on a same time reference as the controller. This method can reduce communication interference between APs.

The following describes the technical solutions in embodiments of this application with reference to the accompanying drawings in embodiments of this application. In descriptions of this application, unless otherwise specified, "/" represents an "or" relationship between associated objects. For example, A/B may represent A or B. In this application, "and/or" describes only an association relationship between associated objects and represents that three relationships may exist. For example, A and/or B may represent the following three cases: Only A exists, both A and B exist, and only B exists, where A and B may be singular or plural. In addition, in the descriptions of this application, unless otherwise specified, "a plurality of" means two or more than two. "At least one of the following items (pieces)" or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding. In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

Before a method for reducing communication interference between APs provided in embodiments of this application is described, a communication system/service scenario to which the method for reducing communication interference between APs provided in this application is applied is first described.

FIG. 3 is a diagram of a structure of a communication system according to an embodiment of this application. As shown in FIG. 3, a controller may be connected to a plurality of APs (for example, an AP1 to an APn in FIG. 3) via a PON, and a link between the controller and the AP is an optical fiber link. A Wi-Fi module of each AP may achieve time synchronization with the controller via the PON. The controller and the AP in the communication system shown in FIG. 3 may perform the method for reducing communication interference between APs provided in this application. For a specific implementation, refer to the following embodiments. Details are not described herein.

The AP in the communication system shown in FIG. 3 may be an optical AP. The optical AP is an optical network unit (optical network unit, ONU) integrated AP, and the optical AP also serves as an ONU in a PON architecture. In an implementation, the optical AP may include an ONU module and a Wi-Fi module. The ONU module is configured to implement a function of an ONU in a PON architecture, and the Wi-Fi module is configured to implement a function of the AP.

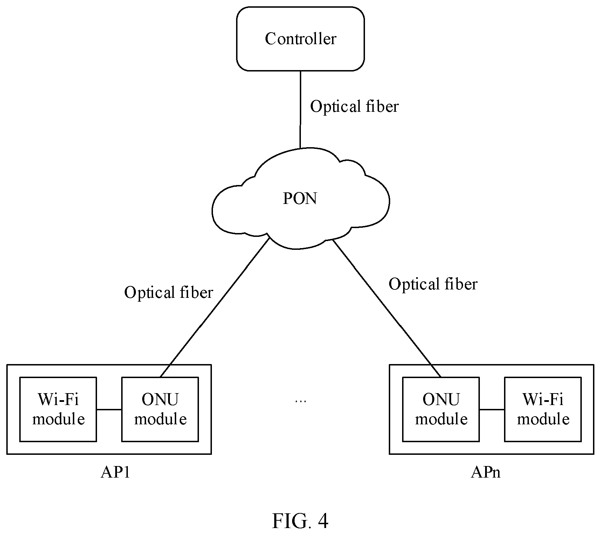

For example, the communication system shown in FIG. 3 may be specifically of a structure shown in FIG. 4. As shown in FIG. 4, a controller may be connected to a plurality of APs (for example, an AP1 to an APn in FIG. 4) via a PON, and a link between the controller and the AP is an optical fiber link. The AP may be an ONU integrated AP, and the AP may include an ONU module and a Wi-Fi module. The controller may be connected to the ONU module of the AP, and the ONU module may be connected to the Wi-Fi module through an internal line.

In this embodiment of this application, a time synchronization interface is provided for the ONU module and the Wi-Fi module of the AP. A time synchronization interface of the ONU module may be connected to a time synchronization interface of the Wi-Fi module through an internal line, and the Wi-Fi module may achieve time synchronization with the ONU module through the time synchronization interface. The ONU module of the AP may achieve time synchronization with the controller via a PON signal by using a PON time synchronization technology in this field. Based on this, the Wi-Fi module of the AP achieves time synchronization with the controller. The time synchronization interface and a synchronization manner provided in this application are described below, and details are not described herein.

It should be noted that synchronization precision of the PON time synchronization technology is high. The Wi-Fi module and the ONU module of the AP achieve time synchronization through an internal line, and synchronization precision is also high. Based on the time synchronization manner provided in this application, precision of synchronization between the Wi-Fi module of the AP and the controller may reach a nanosecond level.

Optionally, an ONU module and a Wi-Fi module of an optical AP may be integrated on one board, and the ONU module and the Wi-Fi module may be connected through a peripheral component interconnect express (peripheral component interconnect express, PCIE) bus.

Optionally, in the communication system shown in FIG. 3 or FIG. 4, the controller may be an optical line terminal (optical line terminal, OLT) or a network management platform connected to the OLT.

It should be understood that the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The following describes the time synchronization interface provided in this application and a principle of performing time synchronization by the ONU module and the Wi-Fi module through the time synchronization interface.

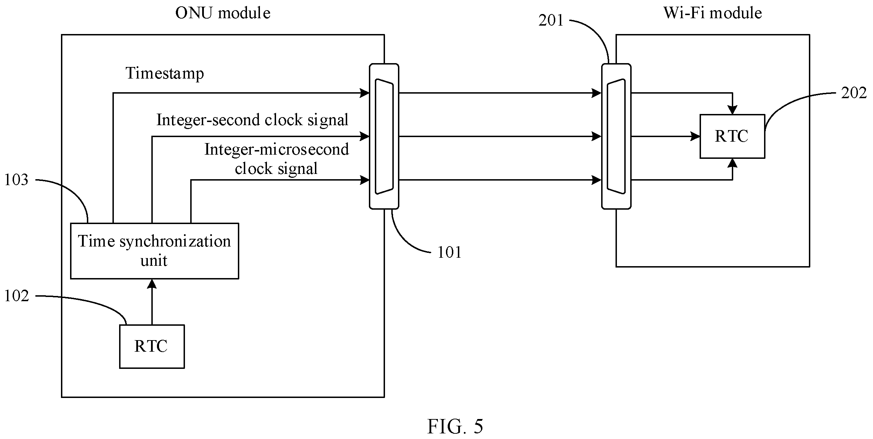

For example, FIG. 5 is a diagram of a principle of performing time synchronization by an ONU module and a Wi-Fi module of an AP based on a time synchronization interface according to an embodiment of this application. The ONU module may serve as a primary device for time synchronization, the Wi-Fi module may serve as a secondary device for time synchronization, and the Wi-Fi module may synchronize time of the ONU module through the time synchronization interface. As shown in FIG. 5, an interface of the ONU module includes a time synchronization interface 101, an interface of the Wi-Fi module includes a time synchronization interface 201, and the time synchronization interface 101 is connected to the time synchronization interface 201. The ONU module further includes a real-time clock (Real_Time Clock, RTC) 102 and a time synchronization unit 103. The RTC 102 is connected to the time synchronization unit 103, and the time synchronization unit 103 is connected to the time synchronization interface 101. The time synchronization unit 103 may obtain an integer-second clock signal, an integer-microsecond clock signal, and timestamp information of the RTC 102, where the timestamp information may include time values of the RTC 102 at rising edge moments of the integer-second clock signal and the integer-microsecond clock signal, and the integer-second clock signal and the integer-microsecond clock signal are in-phase clock signals, and send the integer-second clock signal, the integer-microsecond clock signal, and the timestamp information of the RTC 102 to the Wi-Fi module through the time synchronization interface 101. The Wi-Fi module may further include an RTC 202, and the RTC 202 is connected to the time synchronization interface 201. Therefore, the RTC 202 in the Wi-Fi module may obtain the integer-second clock signal, the integer-microsecond clock signal, and the timestamp information of the RTC 102 in the ONU module. The RTC 202 may perform timing based on the received integer-second clock signal, integer-microsecond clock signal, and timestamp information of the RTC 102. Therefore, it may be considered that time synchronization is achieved between the RTC 202 and the RTC 102.

The following describes, with reference to the communication systems shown in FIG. 3 and FIG. 4 and the time synchronization principle shown in FIG. 5, a method for reducing communication interference between APs provided in embodiments of this application. Actions, terms, and the like in embodiments of this application may be mutually referenced. This is not limited. In embodiments of this application, a message name, a parameter name in a message, or the like is merely an example. During specific implementation, other names may be used. This is not limited.

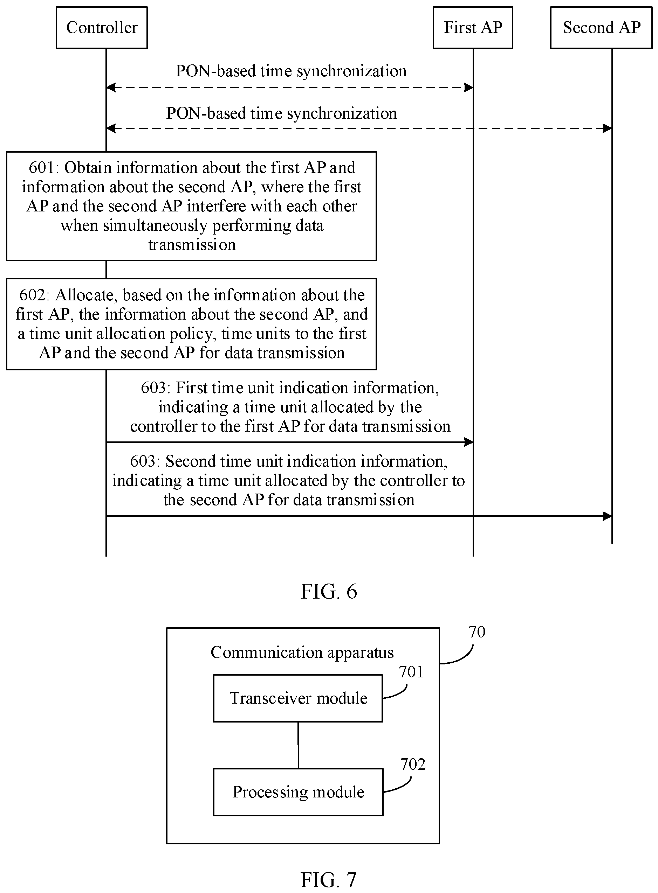

FIG. 6 is a schematic flowchart of a method for reducing communication interference between APs according to an embodiment of this application. As shown in FIG. 6, the method may include the following steps.

Step 601: A controller obtains information about a first AP and information about a second AP. The first AP and the second AP are two of a plurality of APs managed by the controller, the first AP and the second AP interfere with each other when simultaneously performing data transmission, and Wi-Fi modules of the first AP and the second AP may achieve time synchronization with the controller via a PON.

Optionally, the first AP and the second AP may be optical APs, and the first AP and the second AP each include an ONU module and a Wi-Fi module. The Wi-Fi modules of the first AP and the second AP achieve time synchronization with the controller via the PON may specifically include: ONU modules of the first AP and the second AP achieve time synchronization with the controller via the PON, and the Wi-Fi modules of the first AP and the second AP achieve time synchronization with the ONU modules through internal interfaces.

For example, the first AP and the second AP may be two of a plurality of APs connected to the controller in FIG. 4. For structures of the first AP and the second AP, refer to the foregoing descriptions related to FIG. 4. For a manner in which the Wi-Fi modules of the first AP and the second AP achieve time synchronization with the controller, refer to the foregoing descriptions related to FIG. 5. Details are not described herein again.

Optionally, the controller may obtain the information about the first AP and the information about the second AP in a plurality of implementations.

In a possible implementation, the information about the first AP and/or the information about the second AP may be preconfigured on the controller.

In a possible implementation, the information about the first AP may be actively sent by the first AP to the controller, and/or the information about the second AP may be actively sent by the second AP to the controller. For example, the first AP may send a first registration packet to the controller, where the first registration packet carries the information about the first AP, and indicates that the first AP is managed by the controller; and/or the second AP may send a second registration packet to the controller, where the second registration packet carries the information about the second AP, and indicates that the second AP is managed by the controller.

In a possible implementation, the information about the first AP and/or the information about the second AP may be actively requested and obtained by the controller. For example, the controller may send a registration broadcast packet, where the registration broadcast packet indicates an AP connected to the controller to register with the controller, and the registration broadcast packet may be received by any AP (including the first AP and the second AP) connected to the controller. The first AP may feed back the first registration packet to the controller after receiving the registration broadcast packet, and/or the second AP may feed back the second registration packet to the controller after receiving the registration broadcast packet. For content of the first registration packet and the second registration packet, refer to the foregoing descriptions. Details are not described herein again.

It should be understood that the controller may obtain the information about the first AP and the information about the second AP in at least one of the foregoing three implementations. This is not limited in this application.

Optionally, a dedicated network may be established between the controller and each AP connected to the controller to transmit control information. For example, the first registration packet, the second registration packet, and the registration broadcast packet may be carried over the dedicated network. It should be understood that, when the control information is transmitted via the dedicated network, the control information may be isolated from a data packet, to reduce mutual interference.

In an implementation, the dedicated network established between the controller and each AP connected to the controller may be a virtual local area network (virtual local area network, VLAN).

Optionally, in the dedicated network, the controller may allocate an identifier in the dedicated network to each AP, where the identifier is distinguished from an identity (identity, ID) of the AP, to distinguish between the registration packet, the registration broadcast packet, and the data packet, thereby facilitating identification.

Step 602: The controller allocates, based on the information about the first AP, the information about the second AP, and a time unit allocation policy, time units to the first AP and the second AP for data transmission. A time unit allocated by the controller to the first AP for data transmission is different from a time unit allocated by the controller to the second AP for data transmission.

It should be understood that time of the first AP and the second AP is synchronized with that of the controller, and the controller performs data transmission in different time units for the first AP and the second AP. In this case, the first AP and the second AP may perform data transmission in different time units based on a same time reference as the controller. Therefore, time periods in which the first AP and the second AP perform data transmission do not overlap, so that communication interference between the APs can be reduced.

Optionally, the time unit allocation policy may be a simple policy, and the simple policy indicates the controller to allocate different time units to different APs. If the controller applies the simple policy, the controller does not need to determine whether interference exists between APs, and allocates different time units.

Optionally, the time unit allocation policy may be an intelligent policy, and the intelligent policy indicates the controller to allocate different time units to APs that interfere with each other when simultaneously performing data transmission. If the controller applies the intelligent policy, the controller may allocate different time units to APs that interfere with each other when simultaneously performing data transmission. However, for APs that do not interfere with each other when simultaneously performing data transmission, a same time unit or different time units may be allocated for data transmission. This is not limited in this application.

It should be understood that the first AP and the second AP are APs that interfere with each other when simultaneously performing data transmission. Therefore, regardless of whether the controller applies the simple policy or the intelligent policy, the controller allocates different time units to the first AP and the second AP.

Optionally, the time unit may be a slot (slot), and the controller may divide time into a plurality of slots. The slots allocated by the controller to the first AP and the second AP are some of the plurality of slots.

Step 603: The controller sends first time unit indication information to the first AP, where the first time unit indication information indicates the time unit allocated by the controller to the first AP for data transmission; and the controller sends second time unit indication information to the second AP, where the second time unit indication information indicates the time unit allocated by the controller to the second AP for data transmission.

Optionally, the first time unit indication information and the second time unit indication information may be carried over the dedicated network established between the controller and each AP connected to the controller. For the dedicated network, refer to the foregoing descriptions. Details are not described herein again.

Optionally, after receiving the first time unit indication information from the controller, the first AP may learn of the time unit allocated by the controller to the first AP for data transmission. Then, the Wi-Fi module of the first AP may perform, based on time synchronized with that of the controller, data transmission in the time unit allocated by the controller to the first AP for data transmission.

Optionally, after receiving the second time unit indication information from the controller, the second AP may learn of the time unit allocated by the controller to the second AP for data transmission. Then, the Wi-Fi module of the second AP may perform, based on time synchronized with that of the controller, data transmission in the time unit allocated by the controller to the second AP for data transmission.

Based on the method for reducing communication interference between APs provided in this application, for the first AP and the second AP that interfere with each other when simultaneously transmitting data, the controller may allocate different time units to the first AP and the second AP for data transmission. In addition, the Wi-Fi modules of the first AP and the second AP may achieve time synchronization with the controller via the PON. Therefore, the first AP and the second AP may perform data transmission in different time units based on a same time reference as the controller. This method can effectively resolve a problem of mutual interference caused by simultaneous data transmission between APs, thereby reducing or even avoiding communication interference between APs in a communication system.

Optionally, in this embodiment of this application, all the plurality of APs managed by the controller may achieve time synchronization with the controller via the PON, and the controller may allocate time units to the plurality of APs managed by the controller for data transmission. A method for allocating, by the controller, the time units to the plurality of APs managed by the controller for data transmission is the same as the foregoing method for allocating, by the controller, the time units to the first AP and the second AP for data transmission.

In an implementation, that the controller allocates the time units to the plurality of APs managed by the controller for data transmission may include the following steps.
(1) The controller may obtain information about the plurality of APs managed by the controller.
   A method for obtaining information about each AP by the controller is the same as the method for obtaining the information about the first AP or the information about the second AP by the controller in step 601. For details, refer to the foregoing related descriptions. Details are not described herein again.
(2) The controller allocates, based on the information about the plurality of APs and a time unit allocation policy, the time units to the plurality of APs for data transmission.

Optionally, the time unit allocation policy applied by the controller may be a simple policy. For a meaning of the simple policy, refer to the foregoing descriptions. Details are not described herein again. In this case, the controller may allocate a different time unit to each AP for data transmission.

Optionally, the time unit allocation policy applied by the controller may be an intelligent policy. For a meaning of the intelligent policy, refer to the foregoing descriptions. Details are not described herein again. In this case, the controller may allocate different time units to APs (for example, the first AP and the second AP) that interfere with each other when simultaneously performing data transmission. For APs that do not interfere with each other when simultaneously performing data transmission, the controller may allocate a same time unit or different time units for data transmission. This is not limited in this application. It should be understood that, for APs that do not interfere with each other when simultaneously performing data transmission, if the controller arranges the APs in a same time unit for data transmission, data transmission efficiency can be improved without causing communication interference.

In a possible implementation, the controller may determine time unit allocation information based on the information about the plurality of APs and the time unit allocation policy. The time unit allocation information may include a plurality of time units obtained through division by the controller, and record specific time units that are in the plurality of time units and that are used by each AP for data transmission.

For example, the time unit is a slot. The controller may divide one second into 50 slots, and may allocate at least some of the 50 slots to the plurality of APs managed by the controller for data transmission. Slot allocation information generated by the controller may be shown in Table 1. The slot allocation table may include a total of 50 slots: Slot0 to Slot49, and indicate an occupation status of each slot. Slot0, Slot1, and Slot16 are occupied by an AP1, Slot2, Slot3, Slot4, Slot17, and Slot18 are occupied by an AP2, Slot5, Slot6, Slot7, Slot8, Slot19, and Slot20 are occupied by an AP3, Slot9, Slot10, and Slot21 are occupied by an AP4, Slot11, Slot12, Slot13, Slot14, Slot15, Slot22 and Slot23 are occupied by an AP5, Slot30 to Slot33 are occupied by an AP6, Slot37 to Slot40 are occupied by an AP7, and other slots are not occupied by APs.

**Table 1**

| | | | | | | | | | |
|---|---|---|---|---|---|---|---|---|---|
| Slot0 (AP1) | Slot1 (AP1) | Slot2 (AP2) | Slot3 (AP2) | Slot4 (AP2) | Slot5 (AP3) | Slot6 (AP3) | Slot7 (AP3) | Slot8 (AP3) | Slot9 (AP4) |
| Slot10 (AP4) | Slot11 (AP5) | Slot12 (AP5) | Slot13 (AP5) | Slot14 (AP5) | Slot15 (AP5) | Slot16 (AP1) | Slot17 (AP2) | Slot18 (AP2) | Slot19 (AP3) |
| Slot20 (AP3) | Slot21 (AP4) | Slot22 (AP5) | Slot23 (AP5) | Slot24 (None) | Slot25 (None) | Slot26 (None) | Slot27 (None) | Slot28 (None) | Slot29 (None) |
| Slot30 (AP6) | Slot31 (AP6) | Slot32 (AP6) | Slot33 (AP6) | Slot34 (None) | Slot35 (None) | Slot36 (None) | Slot37 (AP7) | Slot38 (AP7) | Slot39 (AP7) |
| Slot40 (AP7) | Slot41 (None) | Slot42 (None) | Slot43 (None) | Slot44 (None) | Slot45 (None) | Slot46 (None) | Slot47 (None) | Slot48 (None) | Slot49 (None) |

(3) The controller sends time unit indication information to each AP, where the time unit indication information indicates a time unit allocated by the controller to the corresponding AP for data transmission.

In an implementation, the time unit indication information sent by the controller to each AP may carry only information about the time unit allocated by the controller to the AP for data transmission. For example, the time unit allocation information is shown in Table 1. Time unit indication information sent by the controller to the AP1 may carry Slot0, Slot1, and Slot16 in the time unit allocation information, time unit indication information sent by the controller to the AP2 may carry Slot2, Slot3, Slot4, Slot17, and Slot18 in the time unit allocation information, time unit indication information sent by the controller to the AP3 may carry Slot5, Slot6, Slot7, Slot8, Slot19, and Slot20 in the time unit allocation information, time unit indication information sent by the controller to the AP4 may carry Slot9, Slot10, and Slot21 in the time unit allocation information, time unit indication information sent by the controller to the AP5 may carry Slot11, Slot12, Slot13, Slot14, Slot15, Slot22 and Slot23 in the time unit allocation information, time unit indication information sent by the controller to the AP6 may carry Slot30 to Slot33 in the time unit allocation information, and time unit indication information sent by the controller to the AP7 may carry Slot37 to Slot40 in the time unit allocation information.

In another implementation, the time unit indication information sent by the controller to each AP may carry the time unit allocation information determined by the controller, and the time unit allocation information includes allocation statuses of all time units obtained through division by the controller. In this case, time unit indication information sent by the controller to different APs may be the same. For example, the time unit allocation information is shown in Table 1. Time unit indication information sent by the controller to each of the AP1 to the AP7 may carry all information in Table 1.

Optionally, when the time unit indication information sent by the controller to each AP carries the time unit allocation information determined by the controller, the controller may send, in a broadcast manner, the time unit indication information including the time unit allocation information. In this manner, the controller can quickly indicate time units to the plurality of APs for data transmission, so that efficiency is higher.

Optionally, after receiving the time unit indication information from the controller, any one of the plurality of APs may learn of a time unit allocated by the controller to the AP for data transmission. Then, a Wi-Fi module of the AP may perform, based on time synchronized with that of the controller, data transmission in the time unit allocated by the controller to the AP for data transmission.

For example, the time unit allocation information determined by the controller is shown in Table 1. The AP1 may perform data transmission in Slot0, Slot1, and Slot16 based on an indication of the time unit indication information, the AP2 may perform data transmission in Slot2, Slot3, Slot4, Slot17, and Slot18 based on an indication of the time unit indication information, the AP3 may perform data transmission in Slot5, Slot6, Slot7, Slot8, Slot19, and Slot20 based on an indication of the time unit indication information, the AP4 may perform data transmission in Slot9, Slot10, and Slot21 based on an indication of the time unit indication information, the AP5 may perform data transmission in Slot11, Slot12, Slot13, Slot14, Slot15, Slot22, and Slot23 based on an indication of the time unit indication information, the AP6 may perform data transmission in Slot30 to Slot33 based on an indication of the time unit indication information, and the AP7 may perform data transmission in Slot37 to Slot40 based on an indication of the time unit indication information.

Based on the foregoing method, the plurality of APs managed by the controller may perform data transmission based on a same time reference as the controller, and APs that interfere with each other in the plurality of APs perform data transmission in different time units. Therefore, the method can reduce communication interference between the plurality of APs managed by the controller.

In addition, it should be further understood that, in a conventional solution, the controller sends a switch control information packet at a moment at which each AP is to perform data transmission, to control receiving/sending behavior of the AP. This is a centralized control manner. However, in the solution provided in this application, the controller only needs to sequentially allocate a time unit to each AP, and then each AP performs data transmission in the corresponding time unit. This is a distributed control manner. The method in this application is more flexible.

Optionally, the method for reducing communication interference between APs in this embodiment of this application may be performed by a communication apparatus. The communication apparatus may be the controller in the foregoing method embodiment, a device including the controller, or a component that can be used in the controller. In addition, the method for reducing communication interference between APs may alternatively be performed by a communication apparatus. The communication apparatus may be the first AP in the foregoing method embodiment, a device including the first AP, or a component that can be used in the first AP. To implement the foregoing functions, the communication apparatus includes a corresponding hardware structure and/or software module for implementing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

FIG. 7 is a diagram of a structure of a communication apparatus. The communication apparatus 70 includes a transceiver module 701 and a processing module 702. The communication apparatus 70 may be the controller in the foregoing method embodiment. The transceiver module 701 may be configured to obtain information about a first AP and information about a second AP, where the first AP and the second AP are managed by the controller, Wi-Fi modules of the first AP and the second AP achieve time synchronization with the controller via a passive optical network PON, and the first AP and the second AP interfere with each other when simultaneously performing data transmission. The processing module 702 may be configured to allocate, based on the information about the first AP, the information about the second AP, and a time unit allocation policy, time units to the first AP and the second AP for data transmission. A time unit allocated by the controller to the first AP for data transmission is different from a time unit allocated by the controller to the second AP for data transmission. The transceiver module 701 may be further configured to: send first time unit indication information to the first AP, and send second time unit indication information to the second AP. The first time unit indication information indicates the time unit allocated by the controller to the first AP for data transmission, and the second time unit indication information indicates the time unit allocated by the controller to the second AP for data transmission.

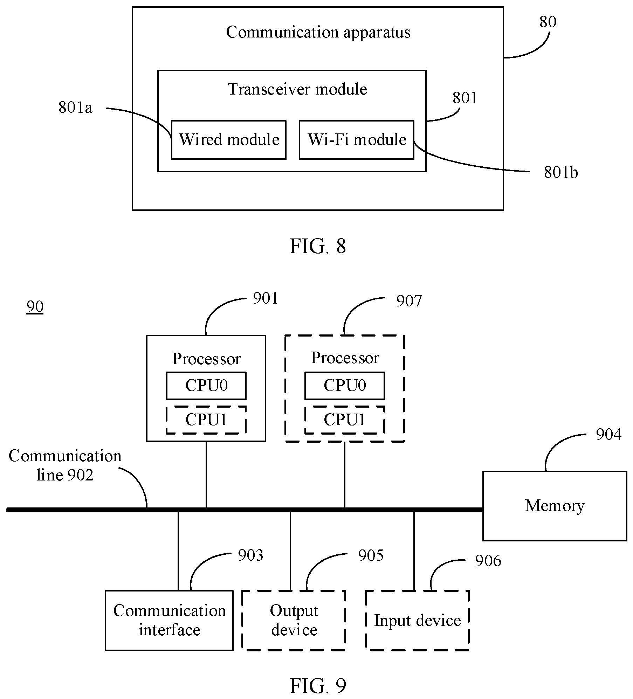

FIG. 8 is a diagram of a structure of a communication apparatus. The communication apparatus 80 includes a transceiver module 801. The transceiver module 801 may specifically include a wired module 801a and a Wi-Fi module 801b. The wired module 801a may be configured to perform wired communication, and the Wi-Fi module 801b is configured to perform data transmission on an air interface side. The communication apparatus 80 may be any AP managed by the controller, for example, the first AP or the second AP.

For example, the controller is the first AP in the foregoing embodiment. The wired module 801a may be configured to receive first time unit indication information from the controller, where the first time unit indication information indicates a time unit allocated by the controller to the first AP for data transmission. The Wi-Fi module 801b may be configured to perform, based on time synchronized with that of the controller, data transmission in the time unit allocated by the controller to the first AP for data transmission.

For example, the controller is the second AP in the foregoing embodiment. The wired module 801a may be configured to receive second time unit indication information from the controller, where the second time unit indication information indicates a time unit allocated by the controller to the second AP for data transmission. The Wi-Fi module 801b may be configured to perform, based on time synchronized with that of the controller, data transmission in the time unit allocated by the controller to the second AP for data transmission.

All related content of each step involved in the foregoing method embodiment may be cited in a function description of a corresponding functional module. Details are not described herein again. The communication apparatus 70 and the communication apparatus 80 provided in embodiments may perform the foregoing method for reducing communication interference between APs. Therefore, for technical effects that can be achieved by the communication apparatus 70 and the communication apparatus 80, refer to the foregoing method embodiment. Details are not described herein again.

In embodiments, the communication apparatus 70 and the communication apparatus 80 are presented in a form of functional modules obtained through division in an integrated manner. The "module" herein may be a specific ASIC, a circuit, a processor that executes one or more software or firmware programs, a memory, an integrated logic circuit, and/or another component capable of providing the foregoing functions. In a simple embodiment, a person skilled in the art may figure out that the communication apparatus 70 and the communication apparatus 80 may be in a form of apparatus 90 shown in FIG. 9.

FIG. 9 is a diagram of a structure of another communication apparatus according to an embodiment of this application. As shown in FIG. 9, the communication apparatus 90 includes one or more processors 901, a communication line 902, and at least one communication interface (in FIG. 9, an example in which a communication interface 903 and one processor 901 are included is only used for description). Optionally, the communication apparatus 90 may further include a memory 904. The processor 901 may be a general-purpose central processing unit (central processing unit, CPU), a microprocessor, an application-specific integrated circuit (application-specific integrated circuit, ASIC), or one or more integrated circuits configured to control program execution of the solutions in this application. The communication line 902 may include a path used for communication between different components. The communication interface 903 may be a transceiver module configured to communicate with another device or a communication network, for example, an Ethernet, a RAN, or a wireless local area network (wireless local area network, WLAN). For example, the transceiver module may be an apparatus like a transceiver or a transceiver machine. Optionally, the communication interface 903 may alternatively be a transceiver circuit located inside the processor 901, and is configured to implement signal input and signal output of the processor. The memory 904 may be an apparatus having a storage function. For example, the memory 904 may be a read-only memory (read-only memory, ROM) or another type of static storage device capable of storing static information and instructions, may be a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of instruction or data structure and capable of being accessed by a computer, but is not limited thereto. The memory may exist independently, and is connected to the processor through the communication line 902. The memory may alternatively be integrated with the processor. The memory 904 is configured to store computer-executable instructions for executing the solutions in this application, and the processor 901 controls the execution. The processor 901 is configured to execute the computer-executable instructions stored in the memory 904, to implement the method for reducing communication interference between APs provided in embodiments of this application. Alternatively, the processor 901 in this embodiment of this application performs a processing-related function in the method for reducing communication interference between APs provided in the following embodiments of this application, and the communication interface 903 is used for communicating with another device or a communication network. This is not specifically limited in embodiments of this application. The computer-executable instructions in this embodiment of this application may also be referred to as application code. This is not specifically limited in embodiments of this application. In an embodiment, the processor 901 may include one or more CPUs, for example, a CPU0 and a CPU1 in FIG. 9.

In an embodiment, the communication apparatus 90 may include a plurality of processors, for example, the processor 901 and a processor 907 shown in FIG. 9. Each of these processors may be a single-core (single-core) processor, or may be a multi-core (multi-core) processor. The processor may include but is not limited to at least one of the following types of compute devices running software: a central processing unit (central processing unit, CPU), a microprocessor, a digital signal processor (digital signal processor, DSP), a microcontroller unit (microcontroller unit, MCU), an artificial intelligence processor, or the like. Each compute device may include one or more cores for executing software instructions to perform an operation or processing.

In an embodiment, the communication apparatus 90 may further include an output device 905 and an input device 906. The output device 905 communicates with the processor 901, and may display information in a plurality of manners. For example, the output device 905 may be a liquid crystal display (liquid crystal display, LCD), a light-emitting diode (light-emitting diode, LED) display device, a cathode ray tube (cathode ray tube, CRT) display device, a projector (projector), or the like. The input device 906 communicates with the processor 901, and may receive an input of a user in a plurality of manners. For example, the input device 906 may be a mouse, a keyboard, a touchscreen device, a sensor device, or the like.

The communication apparatus 90 may also be referred to as a communication device sometimes, and may be a general-purpose device or a dedicated device. For example, the communication apparatus 90 may be a controller in a network or a device having a structure similar to that in FIG. 9. A type of the communication apparatus 90 is not limited in embodiments of this application.

The processor 901 in the communication apparatus 90 shown in FIG. 9 may invoke the computer-executable instructions stored in the memory 904, to cause the communication apparatus 90 to perform the method for reducing communication interference between APs in the foregoing method embodiment. The communication apparatus 90 provided in this embodiment may perform the foregoing method for reducing communication interference between APs. Therefore, for technical effects that can be achieved by the communication apparatus 90, refer to the foregoing method embodiment. Details are not described herein again.

Sequence numbers of the foregoing processes do not mean execution sequences in various embodiments of this application. The execution sequences of the processes should be determined based on functions and internal logic of the processes, and should not be construed as any limitation on the implementation processes of embodiments of this application. A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiment. Details are not described herein again. In the several embodiments provided in this application, it should be understood that the disclosed system, device, and method may be implemented in other manners. For example, the described device embodiment is merely an example. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms. The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, each of the units may exist alone physically, or two or more units may be integrated into one unit. All or some of the foregoing embodiments may be implemented by using software, hardware, firmware, or any combination thereof. When a software program is used to implement embodiments, all or some of the embodiments may be implemented in a form of computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), or the like.

Terms such as "component", "module", and "system" used in this application indicate computer-related entities. The computer-related entities may be hardware, firmware, combinations of hardware and software, software, or software in running. For example, a component may be but is not limited to a process that runs on a processor, a processor, an object, an executable file, a thread of execution, a program, and/or a computer. In an example, both a compute device and an application that runs on the compute device may be components. One or more components may reside within a process and/or a thread of execution, and a component may be located on one computer and/or distributed between two or more computers. In addition, these components may be executed from various computer-readable media that have various data structures. These components may communicate with each other by using a local and/or remote process and based on, for example, a signal having one or more data packets (for example, data from one component, where the component interacts with another component in a local system or a distributed system, and/or interacts with another system via a network like the Internet by using a signal). This application presents aspects, embodiments, or features around a system that may include a plurality of devices, components, modules, or the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the term "example" is used to represent giving an example, an illustration, or a description. Any embodiment or design scheme described as an "example" in this application should not be explained as being more preferred or having more advantages than another embodiment or design scheme. Exactly, the term "example" is for presenting a concept in a specific manner. In embodiments of this application, information (information), signal (signal), message (message), or channel (channel) may be interchangeably used sometimes. It should be noted that expressed meanings are consistent when differences are not emphasized. The terms "of (of)", "corresponding (corresponding, relevant)", and "corresponding (corresponding)" may be interchangeably used sometimes. It should be noted that expressed meanings are consistent when differences are not emphasized. "System" and "network" may be interchangeably used sometimes, and expressed meanings are consistent when differences are not emphasized. For example, "communication network" refers to "communication system". The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for reducing communication interference between access points APs, wherein the method comprises:
obtaining, by a controller, information about a first AP and information about a second AP, wherein the first AP and the second AP are managed by the controller, Wi-Fi modules of the first AP and the second AP achieve time synchronization with the controller via a passive optical network PON, and the first AP and the second AP interfere with each other when simultaneously performing data transmission;
allocating, by the controller based on the information about the first AP, the information about the second AP, and a time unit allocation policy, time units to the first AP and the second AP for data transmission, wherein a time unit allocated by the controller to the first AP for data transmission is different from a time unit allocated by the controller to the second AP for data transmission;
sending, by the controller, first time unit indication information to the first AP, wherein the first time unit indication information indicates the time unit allocated by the controller to the first AP for data transmission; and
sending, by the controller, second time unit indication information to the second AP, wherein the second time unit indication information indicates the time unit allocated by the controller to the second AP for data transmission.

2. The method according to claim 1, wherein the first AP and the second AP are optical APs, and the first AP and the second AP each comprise an optical network unit ONU module and a Wi-Fi module; and
the Wi-Fi modules of the first AP and the second AP achieving time synchronization with the controller via the PON comprises:
the ONU modules of the first AP and the second AP achieve time synchronization with the controller via the PON, and the Wi-Fi modules of the first AP and the second AP achieve time synchronization with the ONU modules through internal interfaces.

3. The method according to claim 1 or 2, wherein the time unit allocation policy is a simple policy, and the simple policy indicates the controller to allocate different time units to different APs.

4. The method according to claim 1 or 2, wherein the time unit allocation policy is an intelligent policy, and the intelligent policy indicates the controller to allocate different time units to APs that interfere with each other when simultaneously performing data transmission.

5. The method according to any one of claims 1 to 4, wherein the first time unit indication information and the second time unit indication information are carried over a dedicated network, and the dedicated network is a dedicated network established between the controller and an AP connected to the controller.

6. The method according to any one of claims 1 to 5, wherein the information about the first AP and/or the information about the second AP is preconfigured.

7. The method according to any one of claims 1 to 5, wherein the method further comprises:
receiving, by the controller, a first registration packet from the first AP, wherein the first registration packet carries the information about the first AP, and indicates that the first AP is managed by the controller; and/or
receiving, by the controller, a second registration packet from the second AP, wherein the second registration packet carries the information about the second AP, and indicates that the second AP is managed by the controller.

8. The method according to claim 7, wherein the first registration packet and the second registration packet are carried over the dedicated network, and the dedicated network is the dedicated network established between the controller and the AP connected to the controller.

9. The method according to claim 7 or 8, wherein before receiving, by the controller, the first registration packet and the second registration packet, the method further comprises:
sending, by the controller, a registration broadcast packet, wherein the registration broadcast packet indicates the AP connected to the controller to register with the controller.

10. The method according to claim 9, wherein the registration broadcast packet is carried over the dedicated network, and the dedicated network is the dedicated network established between the controller and the AP connected to the controller.

11. A method for reducing communication interference between access points APs, wherein the method comprises:
receiving, by a first AP, first time unit indication information from a controller, wherein the first time unit indication information indicates a time unit allocated by the controller to the first AP for data transmission, the first AP is managed by the controller, and a Wi-Fi module of the first AP achieves time synchronization with the controller via a passive optical network PON; and
performing, by the Wi-Fi module of the first AP based on time synchronized with that of the controller, data transmission in the time unit allocated by the controller to the first AP for data transmission.

12. The method according to claim 11, wherein the first AP is an optical AP, and the first AP comprises an optical network unit ONU module and the Wi-Fi module; and
the Wi-Fi module of the first AP achieving time synchronization with the controller via the PON comprises:
the ONU module of the first AP achieves time synchronization with the controller via the PON, and the Wi-Fi module of the first AP achieves time synchronization with the ONU module through an internal interface.

13. The method according to claim 11 or 12, wherein the method further comprises:
sending, by the first AP, a first registration packet to the controller, wherein the first registration packet carries information about the first AP, and indicates that the first AP is managed by the controller.

14. The method according to claim 13, wherein before sending, by the first AP, the first registration packet to the controller, the method further comprises:
receiving, by the first AP, a registration broadcast packet from the controller, wherein the registration broadcast packet indicates an AP connected to the controller to register with the controller.

15. The method according to claim 14, wherein the registration broadcast packet and the first registration packet are carried over a dedicated network, and the dedicated network is a dedicated network established between the controller and the AP connected to the controller.

16. A communication apparatus, wherein the communication apparatus comprises a processor and a memory; and
the memory is configured to store program instructions, and when the processor executes the program instructions, the communication apparatus is caused to perform the method for reducing communication interference between access points APs according to any one of claims 1 to 10 or claims 11 to 15.

17. A computer-readable storage medium, comprising instructions, wherein when the instructions are run on a computer, the computer is caused to perform the method for reducing communication interference between access points APs according to any one of claims 1 to 10 or claims 11 to 15.
